# EUROPEAN PATENT APPLICATION

(11) **EP 3 223 391 A1**
(43) Date of publication of application: **27.09.2017**
(21) Application number: 17157455.1
(22) Date of filing: 22.02.2017
(51) Int. Cl.: H02K 1/14, H02K 7/14, F16F 15/121

(54) **COOLING FAN AND AIR-COOLED REFRIGERATOR COMPRISING SAME**

(30) Priority: 24.03.2016 CN 201610177153
(71) Applicant: Johnson Electric S.A., 3280 Murten (CH)
(72) Inventor: Li, Yue, Shatin, N.T. (HK); Zhou, Chui You, Shatin, N.T. (HK); Liu, Yan Ling, Shatin, N.T. (HK); Li, Gui Hua, Shatin, N.T. (HK); Zhu, Xiao Ning, Shatin, N.T. (HK); Wang, Yong, Shatin, N.T. (HK)
(74) Representative: Hocking, Adrian Niall

(57) **Abstract**

A cooling fan and an air-cooled refrigerator are provided. The cooling fan includes a synchronous motor (10) and an impeller (80). The synchronous motor (10) includes a stator (30) and a permanent magnetic rotor (80). The permanent magnetic rotor (80) includes a rotary shaft (81) and a permanent magnetic rotor main body attached around the rotary shaft. The stator (30) includes a stator core (31) and a stator winding (51) wound around the stator core and powered by an alternating-current power supply. The permanent magnetic rotor operates at a constant rotational speed of 60f/p during a steady state operation of the motor, where f is a frequency of the AC power source and p is the number of pole pairs of the permanent magnet poles. The impeller (100) is connected to the rotary shaft for rotation under the driving of the rotary shaft.

## Description

### FIELD OF THE INVENTION

The present invention relates to a cooling fan and an air-cooled refrigerator using the cooling fan.

### BACKGROUND OF THE INVENTION

A cooling fan is one of the important elements of various existing electric appliances, and its structure and size influence the structure and performance of the entire electric appliance. How to take both cost and the motor performance into consideration has become a major issue in the design of the cooling fan.

### SUMMARY OF THE INVENTION

The features and advantages of the present invention are partially stated in the description below, or may become apparent from the description, or can be learned from practicing the present invention.

In one aspect, a cooling fan is provided which includes: a synchronous motor including a stator and a permanent magnetic rotor rotatable relative to the stator, the permanent magnetic rotor including a rotary shaft and a permanent magnetic rotor main body attached around the rotary shaft, the stator including a stator core and a stator winding wound around the stator core and powered by an alternating-current power supply; and an impeller connected to the rotary shaft for synchronous rotation with the rotary shaft all the time. The permanent magnetic rotor operates at a constant rotational speed during a steady state operation of the motor.

Preferably, the synchronous motor is a single-phase motor and the permanent magnetic rotor operates at the constant rotational speed of 60f/p during the steady state operation of the motor, where f is a frequency of the alternating-current power supply and p is the number of pole pairs of the permanent magnet poles.

Preferably, one of the rotor main body and the impeller is in rigid connection with the rotary shaft for synchronous rotation with the rotary shaft, the other one is in soft connection with the rotary shaft to enable relative rotation therebetween, and a delay synchronization device is connected between the other one and the rotary shaft in order to gradually achieve synchronous rotation therebetween.

Preferably, the delay synchronization device includes a mounting seat and a buffering mechanism. The mounting seat is fixedly connected to the rotary shaft. One end of the buffering mechanism is connected to the mounting seat, and the other end of the buffering mechanism is connected to the rotor main body or the impeller which is in sliding connection with the rotary shaft.

Preferably, the impeller comprises a mounting portion for mounting to the rotary shaft. The mounting portion is in sliding fit with the rotary shaft. The cooling fan further comprises a delay synchronization device including a mounting seat and a buffering mechanism. Two ends of the buffering mechanism are connected to the mounting seat and the mounting portion, respectively, to synchronize the mounting seat and the mounting portion in rotation speed in a delayed manner.

Preferably, the buffering mechanism is an elastic member that is attached around the rotary shaft and is variable in inner and outer diameters.

Preferably, the elastic member is a helical spring.

Preferably, the delay synchronization device further includes a protective sleeve surrounding an outer periphery of the elastic member.

Preferably, one end of the protective sleeve is fixed on the mounting portion, and the other end of the protective sleeve is movably sleeved around the mounting seat.

Preferably, the stator core includes a rectangular/round/ring yoke and two salient poles protruding inwards respectively from two opposing inner surfaces of the yoke. Each salient pole includes a winding portion for mounting the stator winding and arcuate pole shoes extending from an inner radial side towards two circumferential sides of the winding portion. The permanent magnetic rotor is accommodated in a cavity cooperatively defined by the pole shoes.

Preferably, an outer radial end of each of the salient poles and the inner surface of the yoke are provided with an interlocking structure for connecting the salient pole and the rectangular yoke.

Preferably, an outer surface of each of the permanent magnet poles of the permanent magnetic rotor is an arc surface. An air gap with uneven thickness is formed between each permanent magnet pole and the corresponding pole shoe. The air gap is symmetric with respect to the center line of the respective salient pole.

Preferably, a magnetic bridge or slot opening with a large magnetic reluctance exists between the pole shoes of the two salient poles, and the thickness of the air gap is maximum at the magnetic bridge or slot opening and gradually decreases along directions away from the magnetic bridge or slot opening.

Preferably, the motor has an input power set between 2W and 5W and a current of 0.08A to 0.12A.

Preferably, the cooling fan further includes a drive circuit. The stator winding and an external alternating-current power supply are connected in series between a first node and a second node. The drive circuit includes a controllable bidirectional alternating-current switch, an alternating-current to direct-current conversion circuit connected with the bidirectional alternating-current switch in parallel between the first and second nodes, a position sensor, and a switch control circuit. When the controllable bidirectional alternating-current switch is switched on, the alternating-current to direct-current conversion circuit has no current flowing therethrough because the first node and the second node are shorted. The switch control circuit is configured to control the controllable bidirectional alternating-current switch to switch between ON and OFF states of a positive or negative half-wave cycle in a predetermined manner according to rotor magnet pole position information detected by the position sensor and polarity information of the external alternating-current power supply, such that the stator winding drives the rotor to rotate only along a predetermined startup direction in a motor startup stage.

Preferably, the cooling fan further includes an insulation bracket located between the stator core and the stator winding. The insulation bracket consists of an upper insulation bracket and a lower insulation bracket, which are mounted on two axial end faces of the stator core, respectively. The upper insulation bracket and the lower insulation bracket are both integrally formed members covering the two axial end faces of the two salient poles, respectively.

The present invention further provides an air-cooled refrigerator which includes an accommodating cavity with a condenser tube and a cooling fan for cooling the condenser tube.

The cooling fan provided by the present invention has the advantage of compact structure and reduced cost.

### BRIEF DESCRIPTION OF THE DRAWINGS

Embodiments of the present invention will be described in detail below with reference to the accompanying drawings, which will make advantages and implementation of the present invention become more apparent. The contents shown in the figures are for the purposes of illustration only and should not be regarded as limiting.
Fig. 1 illustrates a cooling fan according to an embodiment of the present invention.
Fig. 2 is a sectional view of the cooling fan according to an embodiment of the present invention.
Fig. 3 and Fig. 4 illustrate an impeller of the cooling fan of Fig. 1.
Fig. 5 is an exploded view of a motor of the cooling fan of Fig. 1.
Fig. 6 illustrates an insulation bracket of the motor of Fig. 5.
Fig. 7 is a plan view of the motor of Fig. 5, with an outer housing, the insulation bracket and a stator winding removed.
Fig. 8 illustrates a permanent magnetic rotor of the motor of Fig. 5.
Fig. 9 is a schematic diagram of a drive circuit of the cooling fan according to an embodiment of the present invention.

### DETAILED DESCRIPTION OF THE PREFERRED EMBODIMENTS

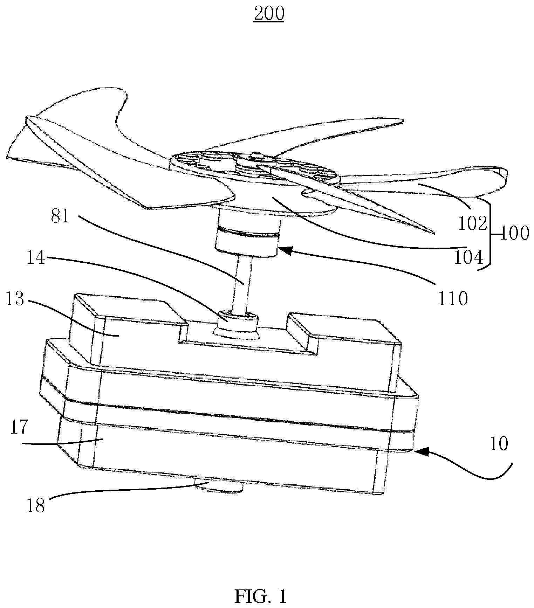

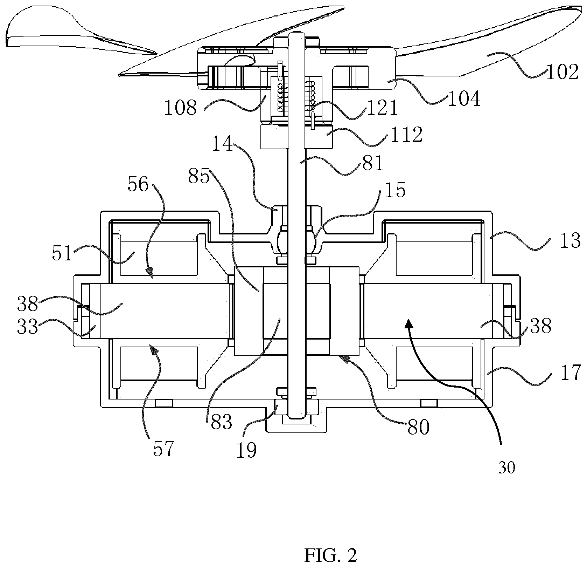

As shown in Fig. 1 and Fig. 2, the present invention provides a cooling fan 200, which includes a synchronous motor 10 and an impeller 100 driven by the synchronous motor 10. The cooling fan 200 of the present invention is particularly suitable for cooling a condenser tube in an air-cooled refrigerator, wherein the cooling fan 200 can be mounted in an accommodating cavity such as a freezing chamber of the air-cooled refrigerator, and an airflow generated by the impeller 100 directly blows to the condenser tube in the freezing chamber.

The synchronous motor 10 can be mounted in a motor housing which consists of a motor top cover 13 and a motor bottom cover 17. The top cover 13 and the bottom cover 17 are provided with bearing seats 14 and 18, respectively, and the bearing seats 14 and 18 are provided with bearings 15 and 19, respectively, for supporting a rotary shaft 81 so that the rotary shaft 81 is rotatable relative to the motor housing.

The impeller 100 is in sliding fit with the rotary shaft 81, and a delay synchronization device 110 is connected between the impeller 100 and the rotary shaft 81 so as to form a soft connection between the impeller 100 and the rotary shaft 81. Specifically, the impeller 100 includes a main portion 104 and a plurality of blades 102 connected to the main portion 104. The main portion 104 is directly mounted on the rotary shaft 81 and is also connected to the delay synchronization device 110 which is mounted on the rotary shaft 81.

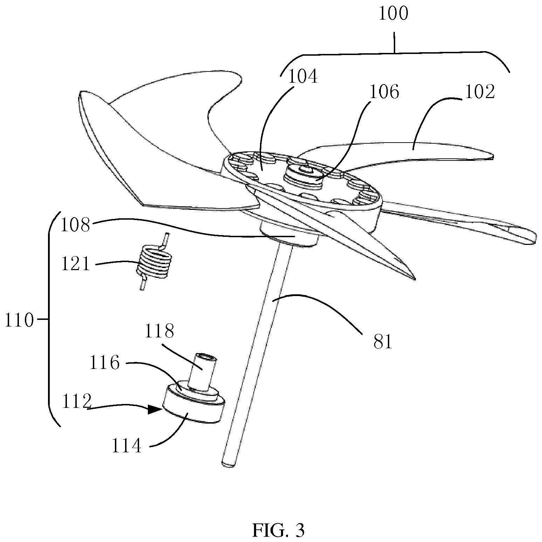

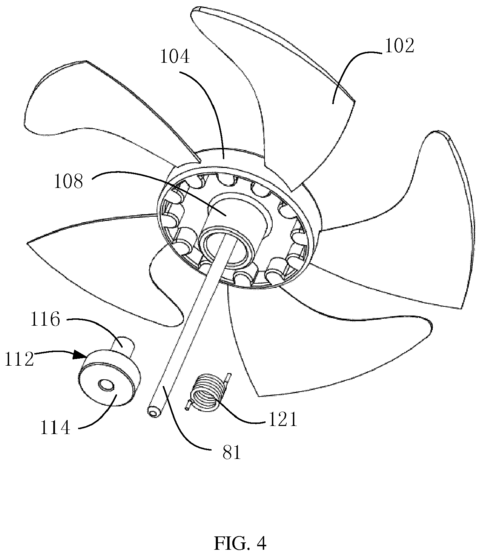

Referring to Fig. 2 to Fig. 4, a mounting portion 106 is arranged at a center of the main portion 104 of the impeller 100. The mounting portion 106 defines a mounting hole for insertion of the rotary shaft 81 and is in sliding fit with the rotary shaft 81. The impeller 100 has a large rotational inertia due to large size and large weight thereof. A speed difference is allowed to exist between the impeller 100 and the rotary shaft 81 when the rotary shaft 81 begins to rotate, thereby decreasing the required output torque of the rotary shaft 81 when the rotary shaft 81 begins to rotate. Speed synchronization between the impeller 100 and the rotary shaft 81 is realized mainly by the delay synchronization device 110 having a buffering function.

The delay synchronization device 110 includes a mounting seat 112 and an elastic member 121 variable in inner and outer diameters. The mounting seat 112 is fixedly attached around the rotary shaft 81 so as to be rotatable along with the rotary shaft 81. It should be understood that the mounting seat 112 may be also movably connected/attached/mounted to the rotary shaft in a connection manner similar to spline connection as long as the two can be kept rotating synchronously. In this embodiment, the elastic member 121 is a helical spring sleeved around the rotary shaft 81, one end of the elastic member 121 is fixedly or movably connected to the mounting seat 112 and is rotatable synchronously with the mounting seat 112, and the other end of the elastic member 121 is fixedly or movably connected to the mounting portion 106 of the impeller and is rotatable synchronously with the mounting portion 106 of the impeller.

When the rotary shaft 81 begins to rotate from a stationary state, the mounting seat 112 and the rotary shaft 81 rotate synchronously, and a rotation speed difference exists between the rotatory shaft 81 and the impeller 100. That is, the rotation speed of the mounting seat 112 is greater than the rotation speed of the mounting portion 106 of the impeller 100. As a result, one end of the elastic member 121 close to the mounting seat 112 is tightened to reduce the inner diameter and finally rotate synchronously with the mounting seat 112, and the other end of the elastic member 121 close to the impeller 100 is also tightened finally to reduce the inner diameter and finally rotate synchronously with the mounting seat 112. Therefore, the elastic member 121 working as a buffering mechanism gradually synchronizes the rotation speed of the mounting seat 112 to that of the mounting portion 106 of the impeller, such that the impeller 100 finally rotates synchronously with the rotary shaft 81. The buffering function provided by the delay synchronization device 110 may decrease the required output torque of the motor 10 during the period of starting of the motor and avoids a situation where the motor 10 fails to drive the impeller 100.

When the rotary shaft 81 changes from a rotating state to a stop state, the impeller 100 has a rotation speed higher than that of the rotary shaft 81 at an initial stage due to the large rotating inertia of the impeller 100. At this moment, an end of the elastic member 121 close to the impeller 100 is loosened to increase its inner diameter, which finally results in that the whole elastic member 121 is loosened and increases the inner diameter. In this process, the elastic member 121 also acting as a buffering member suppresses the rotation speed of the impeller 100 on one hand and, on the other hand, allows the impeller 100 and the rotary shaft 81 to finally synchronize in the rotation speed.

To prevent the inner diameter of the elastic member 121 from increasing to exceed a limit, a protective sleeve 108 can be additionally provided. The protective sleeve 108 surrounds the outer periphery of the elastic member 121 to limit the maximum outer diameter of the elastic member 121, thereby preventing the elastic member 121 from being damaged when the elastic member 121 is loosened to exceed the limit. In this embodiment, the mounting seat 112 includes, from bottom to top, a round body 114, a lug boss 116, and a hub 118. The diameter of the round body 114 is slightly larger than that of the lug boss 116, an outer surface of the lug boss 116 is in slightly tight fit with an inner surface of the protective sleeve 108, and the helical spring 121 is sleeved around the hub 118. It should be understood that it is not intended to limit the elastic member 121 to the helical spring, and any buffering member capable of synchronizing the mounting seat 112 and the mounting portion 106 in rotation speed in a buffered or delayed manner can be used to substitute the elastic member 121.

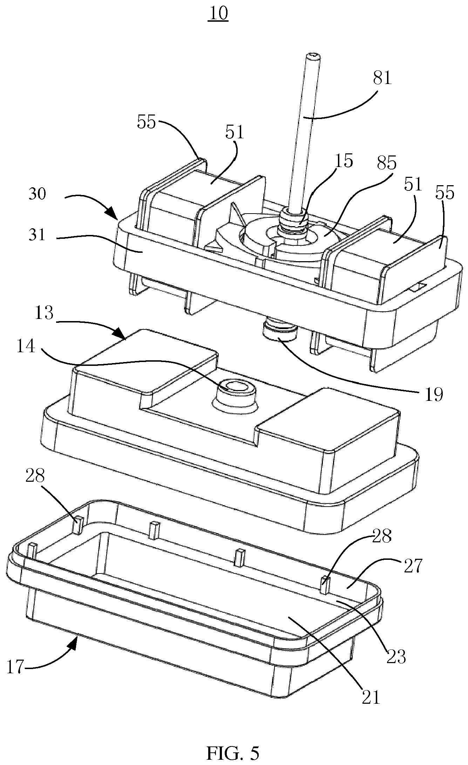

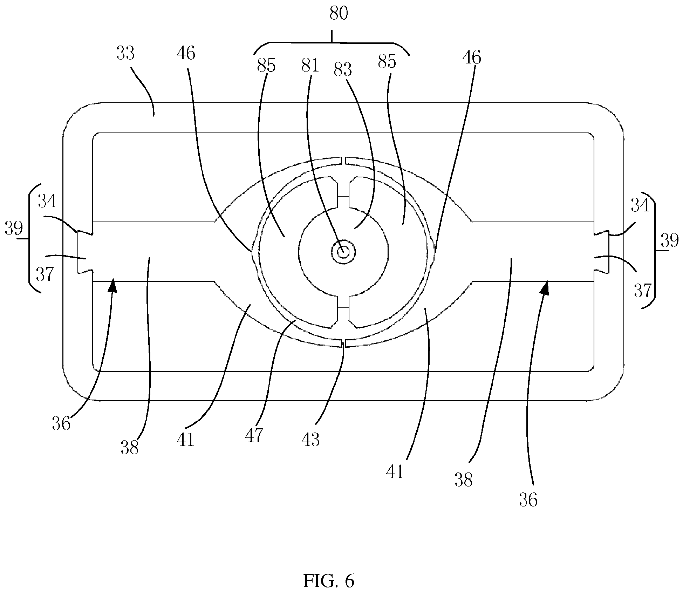

Referring to Fig. 5 and Fig. 6, the motor 10 includes a stator 30 and a permanent magnetic rotor 80 rotatably mounted to the stator 30. The stator 30 includes a stator core 31, a stator winding 51 wound on the stator core 31, and an insulation bracket 55 mounted on the stator core 31. The insulation bracket 55 is located between the stator core 31 and the winding 51 for insulating the stator core 31 and the winding 51. The stator core 31 includes a rectangular yoke 33 and salient poles 36 extending inwards from two opposite inner surfaces of the rectangular yoke 33, respectively. Each salient pole 36 includes a winding portion 38 for mounting the stator winding 51, and an arcuate pole shoe 41 extending from an inner radial end toward two circumferential sides of the winding portion 38. In this embodiment, an outer radial end of each salient pole 36 and the inner surface of the rectangular yoke 33 are provided with a protrusion-groove interlocking structure 39. Specifically, the interlocking structure 39 includes a dovetail tenon/projection 37 disposed on the outer radial end of the salient pole 36 and a dovetail mortise 34 disposed in the inner surface of the rectangular yoke 33 and matched with the dovetail tenon/projection 37.

The pole shoes 41 of the two salient poles 36 as described above cooperatively define an approximately cylindrical cavity in which the permanent magnetic rotor 80 is accommodated. In addition, an inner surface of the cylindrical cavity is provided with positioning grooves 46 along the axial direction of the motor. Preferably, the positioning grooves 46 are formed at center positions of respective pole shoes 41. The motor designed in this way may achieve bidirectional startup of the rotor by cooperating with the elastic members 121 having different rotation directions. Understandably, the positioning grooves 46 may also be disposed at positions deviating from the centers of respective pole shoes 41, and the rotor of the motor designed in this way has a startup capability towards one direction superior to that towards another direction. Referring to Fig. 6, the permanent magnetic rotor 80 includes the rotary shaft 81 and a rotor main body fixedly attached around the rotary shaft 81. The rotor main body includes permanent magnet poles 85 made from a permanent magnet, and optionally, the rotor main body includes a rotor core fixedly attached around the rotary shaft 81 and the permanent magnet poles 85 mounted on the rotor core. An outer side surface of each permanent magnet pole 85 is an arc surface. Preferably, an air gap 47 with uneven thickness is formed between each permanent pole 85 and the corresponding pole shoe 41. In this embodiment, slot openings 43 with a large magnetic reluctance exist between the pole shoes 41 of the two salient poles 36. Alternatively, the slot openings 43 can also be substituted with magnetic bridges. The thickness of the air gaps 47 is maximum at positions corresponding to the slot openings/magnetic bridges 43 and gradually decreases along circumferential directions of the rotor away from the respective slot openings/magnetic bridges 43. Preferably, the thickness of each air gap 47 is symmetric with respect to a center line of the corresponding stator salient pole 36 to thereby form a symmetric uneven air gap. The provision of the symmetric uneven air gaps can reduce the cogging torque of the motor and hence reduce noise. The provision of the positioning grooves 46 makes the magnet pole center of the permanent magnetic rotor 80 deviate by a predetermined angle relative to the center of a stator pole when the stator winding is de-energized and the permanent magnetic rotor 80 is stationary, thereby preventing the rotor 80 from stopping at a dead point position, i.e. a position where the rotor magnet pole is aligned with the stator pole.

In this embodiment, the rotary shaft 81 and the rotor main body are in fixed/rigid connection therebetween to allow synchronous rotation, the rotary shaft 81 and the impeller 100 are in sliding/soft connection therebetween to allow one to rotate relative to the other, and the delay synchronization device 110 is further connected between the rotary shaft 81 and the impeller 100 for gradually synchronizing the rotary shaft 81 and the impeller 100 in the rotation speed. In an alternative embodiment, the rotary shaft 81 and the impeller 100 are in fixed/rigid connection therebetween, the rotary shaft 81 and the rotor main body are in sliding/soft connection therebetween, and the delay synchronization device 110 is connected between the rotary shaft 81 and the rotor main body.

In this embodiment, the permanent magnet poles 85 of the rotor 80 are formed by at least one permanent magnet, and the rotor 80 runs at a constant speed of 60f/p rpm in a steady state stage when the stator winding 51 is connected with an alternating-current (AC) power supply in series, f being a frequency of the AC power supply and p being the number of pole pairs of the rotor. In Fig. 6, the rotor includes a pair of magnet poles and p is equal to one. It should be understood that the rotor may have more magnet poles, for example, four, six or more magnet poles, in other embodiments.

In this embodiment, the rectangular yoke 33 of the stator core 31 has two long sides and two short sides. The two salient poles 36 are connected to the two short sides, respectively, and in this way, the length of each salient pole 36 may be made longer to allow for the mounting of a larger stator winding 51. It should be understood that the shape of the yoke of the stator core 31 is not limited to rectangle and may also be a ring-shape, a U-shape and the like.

The top cover 13 and the bottom cover 17 of the motor housing are basically the same in structure. The description will be made below taking the bottom cover 17 as an example. The bottom cover 17 as a whole takes the shape of a rectangular cover and has an inner cavity 21. An inner surface of the inner cavity 21 has an annular closed step 23 so that the inner cavity 21 has a larger size at the position of an opening of the bottom cover 17 and has a smaller size at the position close to the bottom of the bottom cover 17. The annular step 23 supports an axial end face of the rectangular yoke 33 of the stator core 31. An inner surface 27 of the inner cavity 21 close to the opening of the bottom cover 17 is also provided with a plurality of bumps 28. Specifically, the bumps 28 are disposed above the annular step 23 and, during assembly, the bumps 28 abut against an outer peripheral surface of the rectangular yoke 33 of the stator core 31, such that the stator core 31 is stably mounted in the outer housing consisting of the top cover 13 and the bottom cover 17.

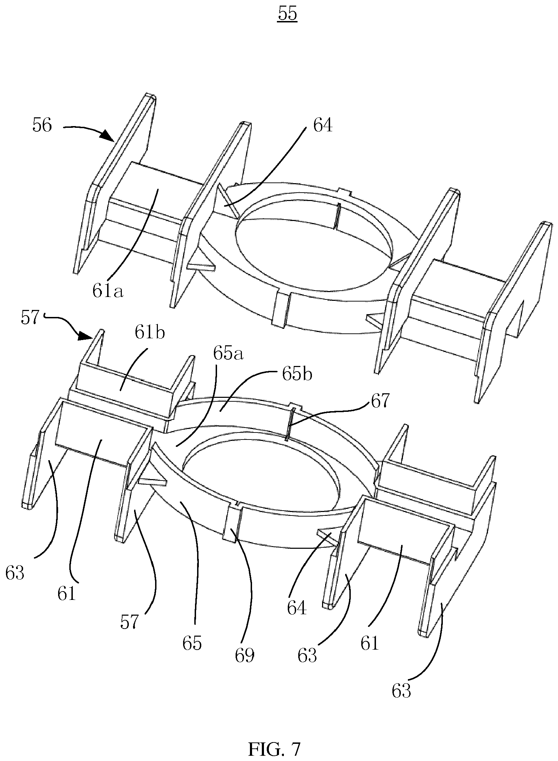

Referring to Fig. 6 and Fig. 7, in this embodiment, the insulation bracket 55 consists of an upper insulation bracket 56 and a lower insulation bracket 57. The upper insulation bracket 56 and the lower insulation bracket 57 are mounted onto two axial end faces of the stator core 31, respectively, to cover axial surfaces and corresponding outer peripheral side surfaces of the two salient poles 36. The upper insulation bracket 56 and the lower insulation bracket 57 are basically the same in structure, and the description will be made below taking the lower insulation bracket 57 as an example.

The lower insulation bracket 57 includes a pole shoe insulation portion 65 and two winding insulation portions 61 connected to opposite two ends of the pole shoe insulation portion 65, respectively. The pole shoe insulation portion 65 is configured for insulating the pole shoes 41 of the two salient poles 36, and includes an approximately annular panel 65a for covering the axial end faces of the pole shoes 41, and a side wall 65b extending from an outer periphery of the panel 65a for covering the outer peripheral surfaces of the pole shoes 41. An outer side surface of the side wall 65b is provided with a rib 69 at a position corresponding to each of the magnetic bridges 43. In addition, an inner side surface of the side wall 65b is provided with a groove 67 at a position corresponding to the respective magnetic bridge 43. In this embodiment, the grooves 67 are disposed in the ribs 69. Each winding insulation portion 61 is configured for insulating the winding portion 38 of the respective salient pole 36, and includes a panel 61a for covering the axial surface of the winding portion 38 of the respective salient pole 36, and side walls 61b extending from two sides of the panel 61a for covering the outer peripheral surfaces of the winding portion 38. Each winding insulation portion 61 includes two partition plates 63 for limiting the position of the stator winding 51. Each partition plate 63 is connected to the panel 61a and end portions of the side walls 61b. Preferably, the insulation bracket 57 further includes a plurality of reinforcing plates 64 connected between the partition plates 63 and the pole shoe insulation portion 65, for example, connected between the partition plates 63 and the panel 65a, or connected between the partition plates 63 and the side wall 65b. The lower insulation bracket 57 is an integrally formed member.

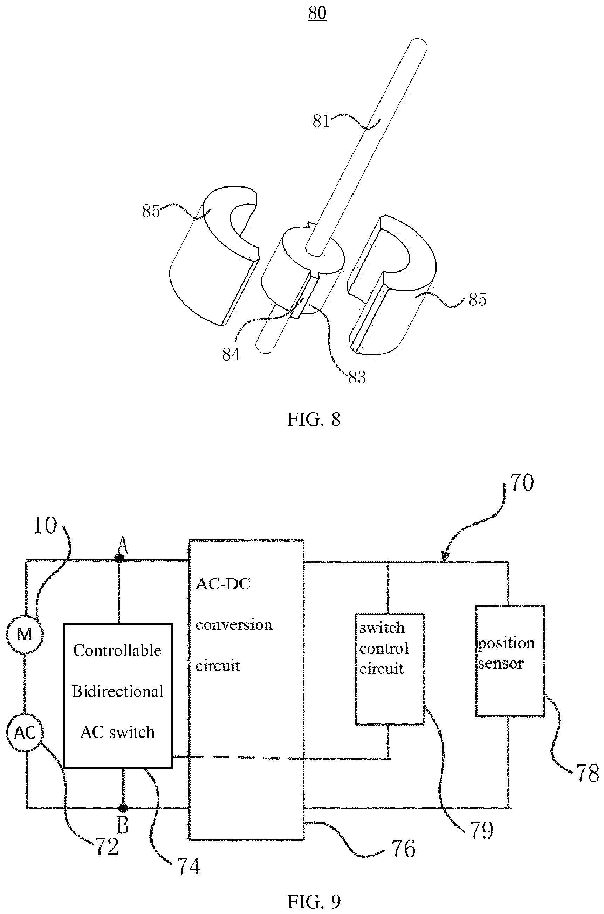

Referring to Fig. 6 and Fig. 8, in this embodiment, the permanent magnetic rotor 80 has a permanent magnetic rotor core 83 fixedly mounted on the rotary shaft 81, and the permanent magnet poles 85 are mounted on an outer surface of the permanent magnetic rotor core 83. The outer peripheral surface of the permanent magnetic rotor core 83 is provided with a plurality of axially-extending ribs 84, and each rib 84 is located at the boundary of two adjacent permanent magnet poles 85. In an alternative embodiment of the present invention, the permanent magnet poles 85 may also be mounted on the rotary shaft 81 directly.

Fig. 9 shows a block diagram of a drive circuit of a synchronous motor according to the present invention. In the drive circuit 70, the stator winding 51 of the motor 10 and the AC power supply 72 are connected in series between two nodes A and B. The AC power supply 72 is preferably a mains alternating-current power supply, with a voltage of, for example, 110V, 220V, 230V and the like. The synchronous motor 10 is a single-phase motor with an input power set between 2W and 5W (for example, 3W) and a current of 0.08A to 0.12A (for example, 0.09A). A controllable bidirectional AC switch 74 is connected in parallel with the series-connected stator winding 51 and AC power supply 72 between the two nodes A and B. The controllable bidirectional AC switch 74 is preferably a three-terminal bidirectional thyristor (TRIAC), with two anodes thereof connected with the two nodes A and B, respectively. It should be understood that the controllable bidirectional AC switch 74 may also be implemented for example by two silicon-controlled rectifiers reversely connected in parallel, and a corresponding control circuit is provided to control the two silicon-controlled rectifiers in a predetermined manner. An AC-DC conversion circuit 76 and the switch 74 are connected in parallel between the two nodes A and B. The AC-DC conversion circuit 76 converts an alternating current between the two nodes A and B into a low-voltage direct current. A position sensor 78 can be powered by the low-voltage direct current output from the AC-DC conversion circuit 76, and is configured to detect the magnet pole position of the permanent magnetic rotor 80 of the synchronous motor 10 and output a corresponding signal. In practice, the position sensor 78 can be a Hall effect sensor, which is disposed on the stator 30 or at a position in the stator close to the rotor. The position sensor 78 deviates by an angle relative to a stator pole, and the angle can be the same as the angle by which the magnet pole center of the rotor deviates relative to the stator pole center when the rotor is stationary.

A switch control circuit 79 is connected with the AC-DC conversion circuit 76, the position sensor 78 and the controllable bidirectional AC switch 74, and is configured to control the controllable bidirectional AC switch 74 to switch between on and off states in a predetermined manner according to magnet pole position information of the permanent magnetic rotor detected by the position sensor 78 and polarity information of the AC power supply 72 acquired from the AC-DC conversion circuit 76, such that the stator winding 51 drives the permanent magnetic rotor 80 to rotate only along a predetermined starting direction in a motor startup stage. In the present invention, when the controllable bidirectional AC switch 74 is switched on, the two nodes A and B are shorted, and the AC-DC conversion circuit 76 does not consume power any more since no current flows therethrough, thereby greatly improving the utilization efficiency of electric energy.

The cooling fan provided by the present invention is compact in structure and small in size, such that the cost can be controlled effectively. In addition, the motor employed in the cooling fan is constant in speed and stable in operation. Moreover, with high efficiency, such a motor is smaller in size and lighter in weight under the same output power.

The preferred embodiments of the present invention are illustrated above with reference to the drawings, and those skilled in the art may make various modifications to implement the present invention, without departing from the scope and essence of the present invention. For instance, features as partially illustrated or described in one embodiment may be used in another embodiment to obtain a further another embodiment. The above is merely intended to provide the preferred feasible embodiments of the present invention, rather than limiting the patent scope of the present invention, and all the equivalent variations made by virtue of the specification and accompanying drawings of the present invention are construed to fall within the scope of the present invention.

## Claims

1. A cooling fan comprising:
a synchronous motor (10), comprising:
a stator (30) comprising a stator core (31) and a stator winding (51) wound around the stator core and powered by an alternating-current power supply and
a permanent magnetic rotor (80) rotatable relative to the stator (30), the permanent magnetic rotor (80) including a rotary shaft (81) and a rotor main body with permanent magnetic poles attached around the rotary shaft; and
an impeller (100) connected to the rotary shaft (81) for rotation under the driving of the rotary shaft (81),
wherein the permanent magnetic rotor operates at a constant rotational speed during a steady state operation of the motor.

2. The cooling fan of claim 1, wherein one of the rotor main body and the impeller (100) is in rigid connection with the rotary shaft (81) for synchronous rotation with the rotary shaft (81), the other one is in soft connection with the rotary shaft (81) to enable relative rotation therebetween, and a delay synchronization device (110) is connected between the other one and the rotary shaft (81) in order to gradually achieve synchronous rotation therebetween.

3. The cooling fan of claim 2, wherein the delay synchronization device (110) includes a mounting seat (112) and a buffering mechanism, the mounting seat (112) is fixedly connected to the rotary shaft (81), one end of the buffering mechanism is connected to the mounting seat, and the other end of the buffering mechanism is connected to the rotor main body or the impeller (100) which is in sliding connection with the rotary shaft.

4. The cooling fan of claim 1, wherein the impeller (100) comprises a mounting portion (106) for mounting to the rotary shaft (81), the mounting portion (106) is in sliding fit with the rotary shaft (81); the cooling fan further comprises a delay synchronization device (110) including a mounting seat (112) and a buffering mechanism, two ends of the buffering mechanism are connected to the mounting seat (112) and the mounting portion (106), respectively, to synchronize the mounting seat (112) and the mounting portion (106) in rotation speed in a delayed manner.

5. The cooling fan of claim 4, wherein the buffering mechanism is an elastic member (121) that is attached around the rotary shaft (81) and is variable in inner and outer diameters.

6. The cooling fan of claim 5, wherein the elastic member (121) is a helical spring.

7. The cooling fan of claim 4, wherein the delay synchronization device (110) further includes a protective sleeve (108) surrounding an outer periphery of the elastic member (121).

8. The cooling fan of claim 1, wherein the stator core (31) includes a yoke (33) and two salient poles protruding inwards respectively from two opposing inner surfaces of the yoke (33), each salient pole (36) includes a winding portion (38) for mounting the stator winding (51) and arcuate pole shoes extending from an inner radial side towards two circumferential sides of the winding portion, and the permanent magnetic rotor (80) is accommodated in a cavity cooperatively defined by the pole shoes (41).

9. The cooling fan of claim 8, wherein an outer radial end of each of the salient poles (36) and the inner surface of the yoke (33) are provided with an interlocking structure for connecting the salient pole (36) and the yoke (33).

10. The cooling fan of claim 8, wherein an outer surface of each of the permanent magnet poles (85) of the permanent magnetic rotor (80) is an arc surface, an air gap (47) with uneven thickness is formed between the outer surface of each permanent magnet pole (85) and an inner surface of a corresponding pole shoe (41), and the air gap is symmetric with respect to a center line of the respective salient pole.

11. The cooling fan of claim 10, wherein a magnetic bridge or slot opening (43) with a large magnetic reluctance exists between the pole shoes (43) of the two salient poles (36), and the thickness of the air gap (47) is maximum at the magnetic bridge or slot opening (43) and gradually decreases along directions away from the magnetic bridge or slot opening (43).

12. The cooling fan of any one of claims 1-11, wherein the cooling fan further includes a drive circuit, the stator winding and the alternating-current power supply are connected in series between a first node and a second node, the drive circuit includes a controllable bidirectional alternating-current switch, an alternating-current to direct-current conversion circuit connected with the bidirectional alternating-current switch in parallel between the first and second nodes, a position sensor, and a switch control circuit, when the controllable bidirectional alternating-current switch is switched on, the alternating-current to direct-current conversion circuit has no current flowing therethrough because the first node and the second node are shorted, the switch control circuit is configured to control the controllable bidirectional alternating-current switch to switch between ON and OFF states of a positive or negative half-wave cycle in a predetermined manner according to rotor magnet pole position information detected by the position sensor and polarity information of the external alternating-current power supply, such that the stator winding drives the rotor to rotate only along a predetermined startup direction in a motor startup stage.

13. The cooling fan of any one of claims 1-12, wherein the synchronous motor is a single-phase motor and the permanent magnetic rotor operates at the constant rotational speed of 60f/p during the steady state operation of the motor, where f is a frequency of the alternating-current power supply and p is the number of pole pairs of the permanent magnet poles.

14. The cooling fan of any one of claims 1 to 13, wherein the synchronous motor (10) is a motor with an input power set between 2W and 5W and a current of 0.08A to 0.12A.

15. An air-cooled refrigerator comprising:
an accommodating cavity with a condenser tube; and
a cooling fan of claim 1 accommodated in the accommodating cavity for cooling the condenser tube.
